(19) **Europäisches Patentamt**
**European Patent Office**
**Office européen des brevets**

(11) **EP 3 809 363 B1**

(12) **EUROPEAN PATENT SPECIFICATION**

(45) Date of publication and mention
of the grant of the patent:
**24.04.2024 Bulletin 2024/17**

(21) Application number: **19203131.8**

(22) Date of filing: **15.10.2019**

(51) International Patent Classification (IPC):
**G06T 3/40** (2024.01)          **G06T 7/80** (2017.01)
**G03B 37/04** (2021.01)

(52) Cooperative Patent Classification (CPC):
**G06T 7/80; G06T 3/4038;** G03B 37/04;
G06T 2207/30244; G06T 2207/30252; H04N 23/698

(54) **METHOD AND DEVICE FOR PROVIDING A SURROUND VIEW IMAGE, AND VEHICLE**

VERFAHREN UND VORRICHTUNG ZUR BEREITSTELLUNG EINES RUNDUMSICHTBILDES UND FAHRZEUG

PROCÉDÉ ET DISPOSITIF POUR LA FOURNITURE D'UNE IMAGE PANORAMIQUE ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.04.2021 Bulletin 2021/16**

(73) Proprietor: **Continental Autonomous Mobility
Germany GmbH
85057 Ingolstadt (DE)**

(72) Inventors:
• **Panakos, Andreas
90411 Nürnberg (DE)**
• **Friebe, Markus
90411 Nürnberg (DE)**

(74) Representative: **Continental Corporation
c/o Continental Automotive GmbH
Intellectual Property
Nordostpark 30
90411 Nürnberg (DE)**

(56) References cited:
• **CHANGQUAN DING ET AL: "Stitching of depth
and color images from multiple RGB-D sensors
for extended field of view", INTERNATIONAL
JOURNAL OF ADVANCED ROBOTIC SYSTEMS,
vol. 16, no. 3, May 2019 (2019-05), XP055665759,
CR ISSN: 1729-8814, DOI:
10.1177/1729881419851665**
• **HANG LIU ET AL: "A Novel Method for Extrinsic
Calibration of Multiple RGB-D Cameras Using
Descriptor-Based Patterns", SENSORS, vol. 19,
no. 2, 16 January 2019 (2019-01-16), page 349,
XP055664081, DOI: 10.3390/s19020349**
• **YU FISHER ET AL: "Semantic alignment of LiDAR
data at city scale", 2015 IEEE CONFERENCE ON
COMPUTER VISION AND PATTERN
RECOGNITION (CVPR), IEEE, 7 June 2015
(2015-06-07), pages 1722-1731, XP032793629,
DOI: 10.1109/CVPR.2015.7298781 [retrieved on
2015-10-14]**
• **Anestis Zaganidis ET AL: "Integrating Deep
Semantic Segmentation into 3D Point Cloud
Registration", , 1 May 2018 (2018-05-01), pages
2942-2949, XP055664374, DOI:
10.1109/LRA.2018.2848308 Retrieved from the
Internet:
URL:https://github.com/mengyuest/iros2018-
slam-papers/raw/master/9deepslam/5.Integra
ting%20Deep%20Semantic%20Segmentation%2
0in
to%203D%20Point%20Cloud%20Registration.p
df**

EP 3 809 363 B1

## Description

The invention relates to a method for providing a surround view image, a device for providing a surround view image, and a vehicle.

State of the art

Vehicle parking systems based on omniview technology are well known. Several vehicle cameras are arranged around the vehicle to provide sensor data covering the entire surrounding of the vehicle. By providing a surround view image, the driver of the vehicle can recognize obstacles or persons in the surrounding. During a parking maneuver, the driver of the vehicle has therefore information regarding the complete environment at hand. Collisions or accidents may accordingly be avoided.

Ding et al. AL: "Stitching of depth and color images from multiple RGB-D sensors for extended field of view", International Journal of Advanced Robotic Systems, vol. 16, no. 3, 2019 relates to stitching methods for images.

Liu et al.: "A Novel Method for Extrinsic Calibration of Multiple RGB-D Cameras Using Descriptor-Based Patterns", Sensors, vol. 19, no. 2, 2019 relates to calibration of cameras.

Fisher et al. "Semantic alignment of LIDAR data at city scale", 2015 IEEE CONFERENCE ON COMPUTER VISION AND PATTERN RECOGNITION, 2015 relates to semantic alignment of LIDAR data.

Zaganidis et al. "Integrating Deep Semantic Segmentation into 3D Point Cloud Registration", 2018, relates to segmentation.

To provide a surround view image, a virtual bowl may be provided and the camera images generated by the vehicle cameras are projected onto the bowl surface.

Typically, several vehicle cameras are provided, for example at least one front camera provided at a front portion of the vehicle, at least one back camera provided at a back portion of the vehicle, and at least one side camera arranged at each side of the vehicle. The vehicle cameras are oriented to cover detection regions having a certain solid angle, such that detection regions of adjacent vehicle cameras overlap.

The projection of the camera images corresponding to different vehicle cameras onto the bowl surface may be carried out based on camera extrinsic parameters of the respective vehicle camera. The camera extrinsic parameters may be calculated off-line in a controlled process with the vehicle being statically arranged on a planar surface.

When the vehicle is driving, the vehicle posture with respect to the ground is constantly changing. A result is a possible mismatch of camera images provided by adjacent vehicle cameras. Accordingly, there is a negative effect on the texture projection back to the virtual bowl which may be visible in overlapping regions of the vehicle cameras.

In view of the above, it is therefore an object of the present invention to provide a method and a device for providing a surround view image which avoids mismatches in overlapping regions and requires only a reasonable amount of processing time and power.

Summary of the invention

In accordance with the invention, a method for providing a surround view image as recited in claim 1 is provided. Further, the invention provides a device for providing a surround view image as recited in claim 9. The invention also provides a vehicle as recited in claim 11. Various preferred features of the invention are recited in the dependent claims.

According to one aspect, therefore, the invention provides a method for providing a surround view image. Camera extrinsic parameters of a plurality of vehicle cameras of a vehicle are received. Each camera of the plurality of vehicle cameras generates respective camera images. Each camera image at least partially overlaps with at least one further camera image. For each vehicle camera, a respective point cloud indicating coordinates of objects in a surrounding of said vehicle camera is generated, based on the camera image generated by said vehicle camera. Coordinate transformations are computed for registering point clouds corresponding to camera images which at least partially overlap. The camera extrinsic parameters are updated based on the computed coordinate transformations. A surround view image is generated from the camera images, using the camera extrinsic parameters and the computed coordinate transformations.

According to a second aspect, the invention provides a device for providing a surround view image, comprising an interface and a computation unit. The interface receives camera extrinsic parameters of a plurality of vehicle cameras of a vehicle. The interface further receives, by each camera of the plurality of vehicle cameras, respective camera images, wherein each camera image at least partially overlaps with at least one further camera image. The computation unit generates, for each vehicle camera, a respective point cloud indicating coordinates of objects in a surrounding of said vehicle camera, based on the camera image generated by said vehicle camera. The computation unit further computes coordinate transformations for registering point clouds corresponding to camera images which at least partially overlap. The computation unit updates the camera extrinsic parameters based on the computed coordinate transformations. The computation unit generates a surround view image from the camera images, using the camera extrinsic parameters and the computed coordinate transformations.

According to a third aspect, the invention provides a vehicle comprising a plurality of vehicle cameras, and a device for providing a surround view image.

The invention provides generation of surround view image based on online camera extrinsic parameters. By registering point clouds corresponding to camera images having an overlap region, the invention may avoid radial distortions of the camera textures on the edges of the cameras in overlapping regions. Misalignment of camera textures is avoided. Moreover, the method uses information which is generally already calculated and required by other modules.

The surround view image generated according to the inventive method provides a realistic view of the surrounding of the vehicle. Possible misidentifications by the driver due to distorted or mismatched areas can therefore be avoided. Accordingly, the invention can enhance the safety of driver assistant systems which make use of the generated surround view image.

According to the invention, the camera extrinsic parameters may be provided in matrix form as follows:

$$\begin{vmatrix} R & T \\ 0 & 1 \end{vmatrix}$$

Herein, R refers to a 3x3 rotation matrix and T to a 3x1 translation-vector. The camera extrinsic parameters refer to coordinate system transformations from three-dimensional world coordinates to three-dimensional camera coordinates. The camera extrinsic parameters define the position of the center of the vehicle camera and the heading of the vehicle camera in world coordinates. The translation vector T provides the position of the origin of the world coordinate system expressed in terms of the camera coordinate system.

According to an embodiment of the method for providing a surround view image, the point clouds are automatically generated by applying an image recognition algorithm to the respective camera image. The image recognition algorithm may comprise known recognition methods, including methods based on machine learning and artificial intelligence models. In particular, the image recognition algorithms may comprise classification algorithms, clustering algorithms, ensemble learning algorithms, regression algorithms, and the like.

According to an embodiment of the method for providing a surround view image, generating the point clouds comprises depth estimation, for instance using motion or deep learning three-dimensional depth estimation approaches. Each camera pixel may be associated with an estimated three-dimensional point provided in vehicle coordinates.

According to an embodiment of the method for providing a surround view image, for each vehicle camera, the generated point cloud indicates coordinates of objects in a surrounding of said vehicle camera in a camera coordinate space corresponding to said vehicle camera. Computing the coordinate transformations for registering point clouds corresponding to camera images which at least partially overlap comprises the step of transforming, for each point cloud, the coordinates in camera coordinate space into corresponding coordinates in vehicle coordinate space, using the camera extrinsic parameters of the corresponding vehicle camera.

According to the invention, computing the coordinate transformations for registering point clouds corresponding to camera images which at least partially overlap comprises the step of applying an iterative closest point algorithm to the point clouds.

According to an embodiment of the method for providing a surround view image, computing the coordinate transformations for registering point clouds corresponding to camera images which at least partially overlap comprises keeping one of the point clouds constant and computing rigid transformations to the remaining point clouds which minimize a predetermined distance function between the point clouds. The rigid transformations may be iteratively computed, using an optimization algorithm. For example, a distance function may be minimized.

According to the invention, semantical annotations for the point clouds are provided, wherein computing the coordinate transformations for registering point clouds corresponding to camera images which at least partially overlap is based on the semantical annotations of the point clouds. Providing semantical annotations may act as a performance booster that will accelerate the process of matching points between two cameras since the sample space may be dramatically reduced. Accordingly, also dense point clouds with many points can be tackled.

According to an embodiment of the method for providing a surround view image, the semantical annotations are automatically computed by semantic segmentation.

According to an embodiment of the method for providing a surround view image, generating the surround view image comprises enhancing the surround view image based on the semantical annotations.

According to an embodiment of the method for providing a surround view image, generating the surround view image from the camera images comprises projecting the camera images to a virtual bowl surrounding a model of the vehicle. The bowl surface may comprise a flat region around the vehicle which smoothly turns into wall-type regions at further distance, giving the appearance of a "bowl". The camera images are projected onto the bowl. The precise algorithm to project the camera images onto the bowl depends on the coordinate transformations for registering the point clouds.

According to an embodiment of the method for providing a surround view image, generating the surround view image from the camera images comprises computing a posture of the vehicle based on the camera extrinsic parameters of the vehicle cameras. A realistic model of the vehicle may be presented as part of the surround view image. The precise location of the vehicle in the surround view image is determined based on the computed posture of the vehicle.

According to an embodiment of the method for providing a surround view image, the generated surround view image is further provided to a driver assistance system which is adapted to perform at least one driving function based on the surround view image. For example, the driver assistance system may accelerate, decelerate or steer the vehicle based on an analysis of the surround view image.

According to an embodiment, the device for providing a surround view image further comprises a display for outputting the generated surround view image. The display may be arranged inside the vehicle and/or may also be accessed via a personal device, e.g. for remote driving.

According to an embodiment, the vehicle further comprises at least one sensor adapted to measure the camera extrinsic parameters of the vehicle cameras, and to provide the measured camera extrinsic parameters of the vehicle cameras to the device.

According to an embodiment, the vehicle comprises at least four vehicle cameras arranged around the vehicle.

Short description of the drawings

For a more complete understanding of the invention and the advantages thereof, exemplary embodiments of the invention are explained in more detail in the following description with reference to the accompanying drawing figures, in which like reference characters designate like parts and in which:

Fig. 1    shows a schematic block diagram of a device for providing a surround view image according to an embodiment of the invention;

Fig. 2    shows a schematic view of two point clouds generated based on camera images from two different vehicle cameras;

Fig. 3    shows a schematic block diagram of a vehicle according to an embodiment of the invention; and

Fig. 4    shows a schematic flow diagram of a method for providing a surround view image according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

Detailed description of the invention

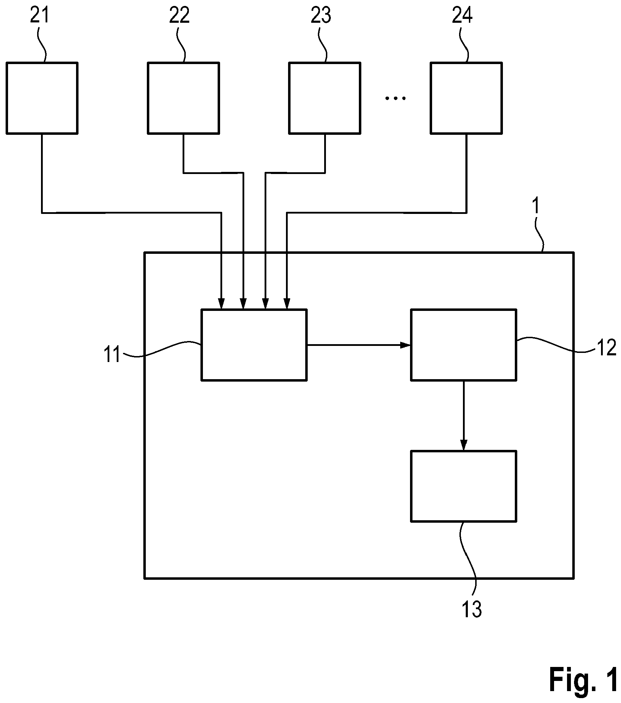

Figure 1 shows a schematic block diagram of a device 1 for providing a surround view image. The device 1 comprises an interface 11 which is connected via cables or via a wireless connection to a plurality of vehicle cameras 22 to 2n of a vehicle. Herein, n can be any integer greater than 2. Preferably, there are at least four vehicle cameras 22 to 2n which are arranged around the vehicle. In particular, the vehicle cameras 22 to 2n may comprise a front camera, a back camera and at least one side camera for each side of the vehicle. The vehicle cameras 22 to 2n are arranged to provide a 360 degree view. Adjacent vehicle cameras 22 to 2n have respective detection regions which partially overlap.

The interface 11 is further connected to a sensor 21 which measures the camera extrinsic parameters of the vehicle cameras 22 to 2n. The sensor 21 may comprise at least one of yaw rate sensors, acceleration sensors, position sensors, and the like. The sensor 21 may provide the camera extrinsic parameters as a 4x4 matrix:

$$\begin{vmatrix} R & T \\ 0 & 1 \end{vmatrix}$$

Herein, R refers to a 3x3 rotation matrix and T to a 3x1 translation-vector.

The vehicle cameras 22 to 2n provide respective camera images to the interface 11.

The interface 11 provides the camera images and the camera extrinsic parameters of the vehicle cameras 22 to 2n a computation unit 12 of the device 1. The computation unit 12 may comprise at least one of a processor, microprocessor, integrated circuit, ASIC, and the like. The computation unit 12 may further comprise at least one memory for storing the received camera extrinsic parameters and camera images and for storing program instructions.

For each camera image corresponding to a specific vehicle camera 22 to 2n, the computation unit 12 generates a point cloud indicating coordinates of objects in a surrounding of the corresponding vehicle camera 22 to 2n. The computation unit 12 may compute the point cloud by applying an image recognition algorithm to the respective camera image. The points of the point cloud may correspond to a certain object or feature in a surrounding of the vehicle which has been detected based on the image recognition algorithm. Each point may have the form of a three-dimensional coordinate in a camera coordinate space corresponding to the respective vehicle camera 22 to 2n.

The computation unit 12 further computes coordinate transformations for registering point clouds corresponding to camera images which overlap. For each point cloud, the computation unit 12 may transform the coordinates in camera coordinate space into corresponding coordinates in vehicle coordinate space, using the camera extrinsic parameters of the corresponding vehicle camera 22 to 2n. Further, an iterative closest point algorithm may be applied to the point clouds for registering point clouds corresponding to overlapping camera images. Herein, one of the point clouds may be kept constant. Rigid transformations are computed to be applied to the remaining point clouds which minimize a predetermined distance function applied to the points of the point clouds.

The computation unit 12 is adapted to generate semantical annotations for the point clouds. The coordinate transformations for registering point clouds corresponding to camera images are computed based on the semantical annotations of the point clouds. The predetermined distance function depends on the semantical annotations. The semantical annotations comprise the identification of certain objects, such as road boundaries, persons, cars, trees, and the like. If matching objects are found in both point clouds corresponding to the camera images, the registration algorithm will try to match the corresponding points of the point clouds. A distance function applied to the points of the point cloud is weighted. Accordingly, there is a larger penalty for having a given distance between matching objects as compared to arbitrary points.

The computation unit 12 may generate the semantical annotations automatically by using semantic segmentation.

The coordinate transformations may have the form of 4x4-dimensional transformation matrices. The combination of these transformation matrices with the transformation matrices calculated from the original camera extrinsic parameters will allow reducing negative misalignment effects on the permanent camera features.

The computation unit 12 updates the the camera extrinsic parameters based on the computed coordinate transformations. It may turn out that there is a misalignment of point clouds generated based on different vehicle cameras 22 to 2n if the originally provided camera extrinsic parameters are used. For example, the vehicle may drive onto a ramp which is not detected, leading to possible misalignments of camera images. Using the coordinate transformations in the form of 4x4-dimensional transformation matrices, the extrinsic parameters of at least some of the vehicle cameras 22 to 2n may be updated. For example, the extrinsic parameters of one of the vehicle cameras 22 to 2n may be kept constant, while the extrinsic parameters of the other vehicle cameras are modified by applying the transformation matrices.

The computation unit 12 further generates a surround view image from the camera images, using the updated camera extrinsic parameters and the computed coordinate transformations. The computation unit 12 applies a stitching operation to combine the camera images. Camera images corresponding to adjacent vehicle cameras 22 to 2n, i.e. overlapping camera images, are transformed using the coordinate transformation. The surround view image, i.e., the combined image, comprises the respective camera images in a way that respects the registering of the corresponding point clouds.

In case semantical annotations have been computed, the provided surround view image may be enhanced based on the semantical annotations. For example, certain objects may be highlighted or labelled based on the semantical annotations.

The computation unit 12 may generate a surround view image by projecting the camera images onto a virtual bowl surrounding a model of the vehicle. The virtual bowl may comprise a planar surface section in the vicinity of the vehicle and a wall -shaped section at a larger distance. Preferably, the planar surface section is smoothly connected to the wall-shaped section.

Moreover, the computation unit 12 may compute a posture of the vehicle based on the camera extrinsic parameters of the vehicle cameras 22 to 2n.

The generated surround view image is presented to a driver via a display 13 of the device 1.

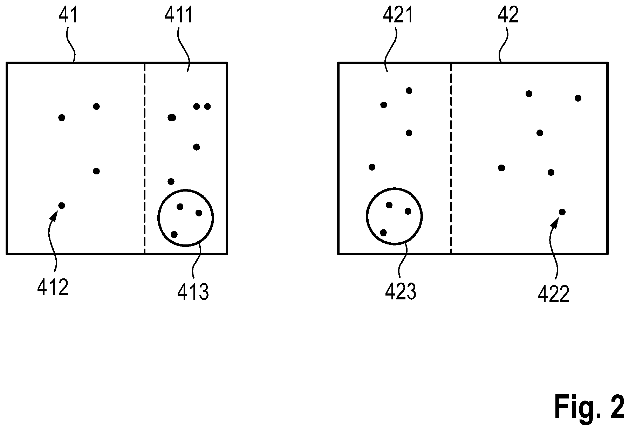

Figure 2 shows a schematic view of two point clouds 41, 42 generated based on camera images from two different vehicle cameras 22 to 2n. Each point cloud 41, 42 comprises a plurality of points 412, 422. The point clouds 41, 42 are at least partially located in regions 411, 421 corresponding to detection regions of the vehicle cameras 22 to 2n which overlap. Moreover, the point clouds 41, 42 are semantically annotated, i.e. certain collections of points 413 and 423 are provided with a semantical label. For example, the collections of points 413 and 423 maybe identified with or assigned to a further vehicle.

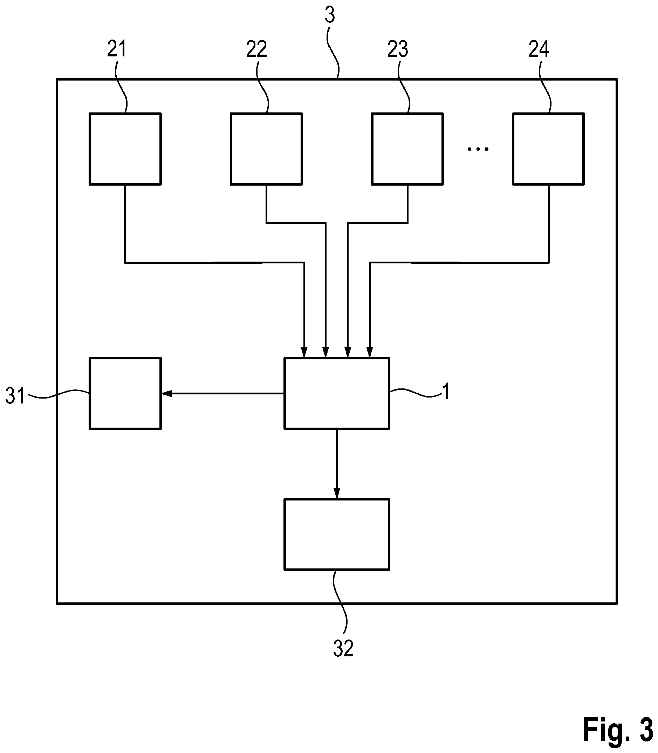

Figure 3 shows a schematic block diagram of a vehicle 3. The vehicle comprises a plurality of vehicle cameras 22 to 2n, in particular front cameras, back cameras and/or side cameras.

The vehicle 3 further comprises a sensor 21 for determining the camera extrinsic parameters of the vehicle cameras 22 to 2n.

The sensor 21 provides the camera extrinsic parameters to a device 1 for providing a surround view image. Further, the vehicle cameras 22 to 2n provide respective camera images to the device 1. The device 1 is arranged according to one of the previously described embodiments. As described above, the device 1 provides a surround view image based on the received camera extrinsic parameters and provided camera images by computing coordinate transformations for registering point clouds corresponding to overlapping camera images.

The device 1 can provide the generated surround view image to a display 31 of the vehicle 3. Accordingly, the surround view image may be presented to a driver of the vehicle 3.

The device 1 may further provide the generated surround view image to a driver assistance system 32 which may be adapted to control at least one driving function of the vehicle 3. For example, the driver assistance system 32 may accelerate, decelerate or steer the vehicle in accordance with the generated surround view image.

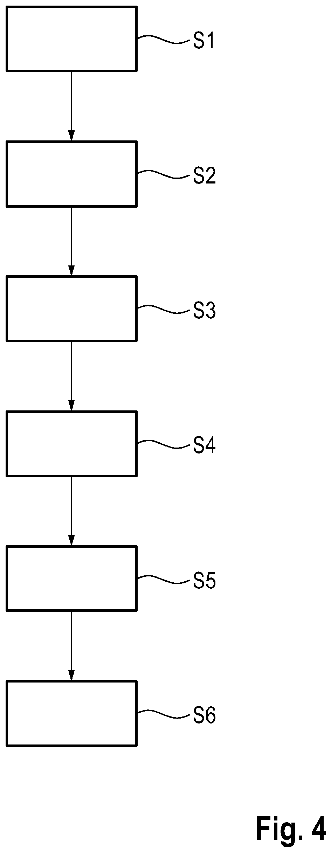

Figure 4 shows a schematic flow diagram of a method for providing a surround view image.

In a first method step S1, camera extrinsic parameters are received, corresponding to a plurality of vehicle cameras 22 to 2n of a vehicle 3, preferably at least four vehicle cameras 22 to 2n.

In the second method step S2, each camera generates a respective camera image. Camera images from adjacent cameras partially overlap.

In a method step S3, for each vehicle camera, a respective point cloud is generated, indicating coordinates of objects in a surrounding of the vehicle camera, based on the camera image generated by the vehicle camera. The point clouds may be automatically generated by applying an image recognition algorithm to the respective camera image. The generated point cloud indicates coordinates of objects in a surrounding of the vehicle camera in a camera coordinate space corresponding to the vehicle camera.

In a method step S4, coordinate transformations for registering point clouds corresponding to camera images which overlap are computed. Part of the computation of the coordinate transformations for registering point clouds may be to transform the coordinates in camera coordinate space into corresponding coordinates in vehicle coordinate space, using the camera extrinsic parameters of the corresponding vehicle camera.

Accordingly, transformations for registering point clouds may be computed by applying an iterative closest point algorithm to the point clouds. One of the point clouds may be kept constant, whereas the remaining point clouds may be transformed using rigid transformations. The transformation may be chosen such that a predetermined distance function between the points of the point clouds is minimized.

The point clouds may be semantically annotated, e.g. using semantic segmentation. Computing the coordinate transformations for registering point clouds corresponding to overlapping camera images may be based on the semantical annotations of the point clouds. For example, the predetermined distance function between points of the point clouds may depend on the semantical annotations. In particular, if points with identical semantical annotations are identified in both point clouds, the predetermined distance function may have a higher weight for the distance between said points.

The camera extrinsic parameters are updated based on the computed coordinate transformations.

In a further method step S5, a surround view image is generated from the camera images. The surround view image is generated using the updated camera extrinsic parameters and the computed coordinate transformations. The surround view image may be enhanced based on the semantical annotations.

The surround view image may be generated by projecting the camera images to a virtual bowl surrounding a model of the vehicle. Further, a posture of the vehicle 3 may be computed based on the extrinsic parameters of the vehicle cameras 22 to 2n.

In a method step S6, the surround view image is presented to a driver of the vehicle 3. Alternatively or additionally, the surround view image may be used in a driver assistance system 32 to control driving functions of the vehicle.

REFERENCE SIGNS

| | |
|---|---|
| 1 | device |
| 3 | vehicle |
| 11 | interface |
| 12 | computation unit |
| 13 | display |
| 21 | sensor |
| 22-2n | vehicle cameras |
| 31 | display |
| 32 | driver assistance system |
| 41, 42 | point clouds |
| 411, 421 | overlapping regions |
| 412, 422 | points |
| 413, 423 | semantical annotations |
| S1-S6 | method steps |

**Claims**

1. A method for providing a surround view image, the method comprising the following steps:

receiving camera extrinsic parameters of a plurality of vehicle cameras (22-2n) of a vehicle (3); generating, by each vehicle camera (22-2n) of the plurality of vehicle cameras (22-2n), respective camera images, wherein each camera image at least partially overlaps with at least one further camera image; generating, for each vehicle camera (22-2n), a respective three-dimensional point cloud (41, 42) indicating coordinates of objects in a surrounding of said vehicle camera (22-2n), based on the camera image generated by said vehicle camera (22-2n); providing semantic annotations for the point clouds (41, 42), wherein the semantic annotations comprise the identification of certain objects; computing coordinate transformations for registering point clouds (41, 42) corresponding to camera images which at least partially overlap, and comprising the step of applying an iterative closest point algorithm to the point clouds (41, 42), wherein a distance function applied to the points of the point cloud is weighted based on the semantical annotations of the point clouds (41, 42); updating the camera extrinsic parameters based on the computed coordinate transformations; and

generating a surround view image from the camera images, using the updated camera extrinsic parameters and the computed coordinate transformations.

2. The method according to claim 1, wherein the point clouds (41, 42) are automatically generated by applying an image recognition algorithm to the respective camera image.

3. The method according to claim 1 or 2,

   wherein, for each vehicle camera (22-2n), the generated point cloud (41, 42) indicates coordinates of objects in a surrounding of said vehicle camera (22-2n) in a camera coordinate space corresponding to said vehicle camera (22-2n), and

   wherein computing the coordinate transformations for registering point clouds (41, 42) corresponding to camera images which at least partially overlap comprises the step of transforming, for each point cloud (41, 42), the coordinates in camera coordinate space into corresponding coordinates in vehicle coordinate space, using the camera extrinsic parameters of the corresponding vehicle camera (22-2n).

4. The method according to any of the preceding claims, wherein computing the coordinate transformations for registering point clouds (41, 42) corresponding to camera images which at least partially overlap comprises keeping one of the point clouds (41, 42) constant and computing rigid transformations to the remaining point clouds (41, 42) which minimize a predetermined distance function between the point clouds (41, 42).

5. The method according to any of the preceding claims, wherein the semantical annotations are automatically computed by semantic segmentation.

6. The method according to any of the preceding claims,

   wherein generating the surround view image comprises enhancing the surround view image by highlighting or labelling certain objects based on the semantical annotations.

7. The method according to any of the preceding claims,

   wherein generating the surround view image from the camera images comprises projecting the camera images to a virtual bowl surrounding a model of the vehicle (3), wherein the virtual bowl comprises a flat region around the vehicle which smoothly turns into wall-type regions at further distance.

8. The method according to any of the preceding claims,

   wherein generating the surround view image from the camera images comprises computing a posture of the vehicle based on the camera extrinsic parameters of the vehicle cameras (22-2n).

9. A device (1) for providing a surround view image, comprising:

   an interface (11) adapted to

   - receive camera extrinsic parameters of a plurality of vehicle cameras (22-2n) of a vehicle (3), and
   - receive, by each vehicle camera (22-2n) of the plurality of vehicle cameras (22-2n), respective camera images, wherein each camera image at least partially overlaps with at least one further camera image; and

   a computation unit (12) adapted to:

   - generate, for each vehicle camera (22-2n), a respective three-dimensional point cloud (41, 42) indicating coordinates of objects in a surrounding of said vehicle camera (22-2n), based on the camera image generated by said vehicle camera (22-2n),
   - provide semantical annotations for the point clouds (41, 42), wherein the semantical annotations comprise the identification of certain objects,
   - compute coordinate transformations for registering point clouds (41, 42) corresponding to camera images which at least partially overlap, and comprising the step of applying an iterative closest point algorithm to the point clouds (41, 42), wherein a distance function applied to the points of the point cloud is weighted based on the semantical annotations of the point clouds (41, 42),
   - update the camera extrinsic parameters based on the computed coordinate transformations, and
   - generate a surround view image from the camera images, using the updated camera extrinsic parameters and the computed coordinate transformations.

10. The device according to claim 9, further comprising a display (13) for outputting the generated surround view image.

11. A vehicle (3), comprising

  a plurality of vehicle cameras (22-2n); and
  a device (1) according to one of claims 9 or 10.

12. The vehicle (3) according to claim 11, further comprising at least one sensor (21) adapted to

  - measure the camera extrinsic parameters of the vehicle cameras (22-2n), and
  - provide the measured camera extrinsic parameters of the vehicle cameras (22-2n) to the device.

13. The vehicle (3) according to claim 11 or 12, comprising at least four vehicle cameras (22-2n) arranged around the vehicle.

**Patentansprüche**

1. Verfahren zum Bereitstellen eines Surround View-Bildes, wobei das Verfahren die folgenden Schritte umfasst:

  Empfangen extrinsischer Kameraparameter mehrerer Fahrzeugkameras (22-2n) eines Fahrzeugs (3);
  Erzeugen durch jede Fahrzeugkamera (22-2n) der mehreren Fahrzeugkameras (22-2n) jeweiliger Kamerabilder, wobei jedes Kamerabild wenigstens teilweise mit wenigstens einem weiteren Kamerabild überlappt;
  Erzeugen für jede Fahrzeugkamera (22-2n) einer jeweiligen dreidimensionalen Punktwolke (41, 42), die Koordinaten von Objekten in einer Umgebung der Fahrzeugkamera (22-2n) angibt, basierend auf dem durch die Fahrzeugkamera (22-2n) erzeugten Kamerabild;
  Bereitstellen semantischer Anmerkungen für die Punktwolken (41, 42), wobei die semantischen Anmerkungen die Identifizierung bestimmter Objekte enthalten;
  Berechnen von Koordinatentransformationen zum Auflisten von Punktwolken (41, 42), die Kamerabildern, die wenigstens teilweise überlappen, entsprechen, und umfassend den Schritt des Anwendens eines iterativen Nächster-Punkt-Algorithmus auf die Punktwolken (41, 42), beidem eine Abstandsfunktion, die auf die Punkte der Punktwolke angewendet wird, basierend auf den semantischen Anmerkungen der Punktwolken (41, 42) gewichtet wird;
  Aktualisieren der extrinsischen Kameraparameter basierend auf den berechneten Koordinatentransformationen; und

  Erzeugen eines Surround View-Bildes aus den Kamerabildern unter Verwendung der aktualisierten extrinsischen Kameraparameter und der berechneten Koordinatentransformationen.

2. Verfahren nach Anspruch 1, wobei die Punktwolken (41, 42) durch Anwenden eines Bilderkennungsalgorithmus auf das jeweilige Kamerabild automatisch erzeugt werden.

3. Verfahren nach Anspruch 1 oder 2,

  wobei für jede Fahrzeugkamera (22-2n) die erzeugte Punktwolke (41, 42) Koordinaten eines Objekts in einer Umgebung der Fahrzeugkamera (22-2n) in einem Kamera-Koordinatenraum, der der Fahrzeugkamera (22-2n) entspricht, angibt, und
  wobei das Berechnen der Koordinatentransformationen zum Auflisten von Punktwolken (41, 42), die den Kamerabildern entsprechen, die wenigstens teilweise überlappen, den Schritt des Transformierens für jede Punktwolke (41, 42) der Koordinaten in einem Kamera-Koordinatenraum in entsprechende Koordinaten in einen Fahrzeug-Koordinatenraum unter Verwendung der extrinsischen Kameraparameter der entsprechenden Fahrzeugkamera (22-2n) umfasst.

4. Verfahren nach einem der vorhergehenden Ansprüche, wobei das Berechnen der Koordinatentransformationen zum Auflisten von Punktwolken (41, 42), die Kamerabildern entsprechen, die wenigstens teilweise überlappen, das Konstanthalten einer der Punktwolken (41, 42) und das Berechnen starrer Transformationen für die verbleibenden Punktwolken (41, 42), die eine vorgegebene Abstandsfunktion zwischen den Punktwolken (41, 42) minimal machen, umfasst.

5. Verfahren nach einem der vorhergehenden Ansprüche, wobei die semantischen Anmerkungen durch semantische Segmentierung automatisch berechnet werden.

6. Verfahren nach einem der vorhergehenden Ansprüche, wobei das Erzeugen des Surround View-Bildes das Verbessern des Surround View-Bildes durch Hervorheben oder Angleichen bestimmter Objekte basierend auf den semantischen Anmerkungen umfasst.

7. Verfahren nach einem der vorhergehenden Ansprüche, wobei das Erzeugen des Surround View-Bildes aus den Kamerabildern das Projizieren der Kamerabilder auf eine virtuelle Schale, die ein Modell des Fahrzeugs (3) umgibt, umfasst, wobei die virtuelle Schale einen ebenen Bereich um das Fahrzeug aufweist, der in größerem Abstand gleichmäßig in wandtypische Bereiche übergeht.

8. Verfahren nach einem der vorhergehenden Ansprüche, wobei das Erzeugen des Surround View-Bildes aus den Kamerabildern das Berechnen einer Orientierung des Fahrzeugs basierend auf den extrinsischen Kameraparameter der Fahrzeugkameras (22-2n) umfasst.

9. Vorrichtung (1) zum Bereitstellen eines Surround View-Bildes, die Folgendes umfasst:

eine Schnittstelle (11), die ausgelegt ist zum

- Empfangen extrinsischer Kameraparameter mehrerer Fahrzeugkameras (22-2n) eines Fahrzeugs (3) und
- Empfangen durch jede Fahrzeugkamera (22-2n) der mehreren Fahrzeugkameras (22-2n) jeweiliger Kamerabilder, wobei jedes Kamerabild wenigstens teilweise mit wenigstens einem weiteren Kamerabild überlappt; und eine Recheneinheit (12), die ausgelegt ist zum
- Erzeugen für jede Fahrzeugkamera (22-2n) einer jeweiligen dreidimensionalen Punktwolke (41, 42), die Koordinaten von Objekten in einer Umgebung der Fahrzeugkamera (22-2n) angibt, basierend auf dem Kamerabild,

das durch die Fahrzeugkamera (22-2n) erzeugt wird,

- Bereitstellen semantischer Anmerkungen für die Punktwolken (41, 42), die den Kamerabildern entsprechen, die wenigstens teilweise überlappen, und
- Berechnen von Koordinatentransformationen zum Auflisten von Punktwolken (41, 42), die Kamerabildern, die wenigstens teilweise überlappen, entsprechen, und

umfassend den Schritt des Anwendens eines iterativen Nächster-Punkt-Algorithmus auf die Punktwolken (41, 42), wobei eine Abstandsfunktion, die auf die Punkte der Punktwolke angewendet wird, basierend auf den semantischen Anmerkungen der Punktwolken (41, 42) gewichtet wird,

- Aktualisieren der extrinsischen Kameraparameter basierend auf den berechneten Koordinatentransformationen und
- Erzeugen eines Surround View-Bildes aus den Kamerabildern unter Verwendung der aktualisierten extrinsischen Kameraparameter und der berechneten Koordinatentransformationen.

10. Vorrichtung nach Anspruch 9, die ferner eine Anzeige (13) zum Ausgeben des erzeugten Surround View-Bildes enthält.

11. Fahrzeug (3), das Folgendes umfasst:

mehrere Fahrzeugkameras (22-2n); und
eine Vorrichtung (1) nach einem der Ansprüche 9 oder 10.

12. Fahrzeug (3) nach Anspruch 11, das ferner wenigstens einen Sensor (21) umfasst, der ausgelegt ist zum

- Messen der extrinsischen Kameraparameter der Fahrzeugkameras (22-2n) und
- Bereitstellen der gemessenen extrinsischen Kameraparameter der Fahrzeugkameras (22-2n) für die Vorrichtung.

13. Fahrzeug (3) nach Anspruch 11 oder 12, das wenigstens vier Fahrzeugkameras (22-2n), die um das Fahrzeug angeordnet sind, umfasst.

**Revendications**

1. Procédé de fourniture d'une image de vue enveloppante, le procédé comportant les étapes suivantes :

recevoir des paramètres extrinsèques de caméras d'une pluralité de caméras (22-2n) de véhicule d'un véhicule (3) ;
faire générer, par chaque caméra (22-2n) de véhicule de la pluralité de caméras (22-2n) de véhicule, des images de caméras respectives, chaque image de caméra chevauchant au moins partiellement au moins une autre image de caméra ;
générer, pour chaque caméra (22-2n) de véhicule, un nuage (41, 42) de points tridimensionnel respectif indiquant des coordonnées d'objets dans un voisinage de ladite caméra (22-2n) de véhicule, sur la base de l'image de caméra générée par ladite caméra (22-2n) de véhicule ;
fournir des annotations sémantiques pour les nuages (41, 42) de points, les annotations sémantiques comportant l'identification de certains objets ;
calculer des transformations de coordonnées pour aligner des nuages (41, 42) de points correspondant à des images de caméras qui se chevauchent au moins partiellement, et comportant l'étape consistant à appliquer un algorithme itératif du point le plus proche aux nuages (41, 42) de points, une fonction de distance appliquée aux points du nuage de points étant pondérée sur la base des annotations sémantiques des nuages (41, 42) de points ;

mettre à jour les paramètres extrinsèques de caméras d'après les transformations de coordonnées calculées ; et

générer une image de vue enveloppante à partir des images de caméras, en utilisant les paramètres extrinsèques de caméras mis à jour et les transformations de coordonnées calculées.

**2.** Procédé selon la revendication 1, les nuages (41, 42) de points étant automatiquement générés en appliquant un algorithme de reconnaissance d'images à l'image de caméra considérée.

**3.** Procédé selon la revendication 1 ou 2,

pour chaque caméra (22-2n) de véhicule, le nuage (41, 42) de points généré indiquant des coordonnées d'objets dans un voisinage de ladite caméra (22-2n) de véhicule dans un espace de coordonnées de caméra correspondant à ladite caméra (22-2n) de véhicule, et

le calcul des transformations de coordonnées pour aligner des nuages (41, 42) de points correspondant à des images de caméras qui se chevauchent au moins partiellement comportant l'étape consistant à transformer, pour chaque nuage (41, 42) de points, les coordonnées dans l'espace de coordonnées de caméra en coordonnées correspondantes dans un espace de coordonnées de véhicule, en utilisant les paramètres extrinsèques de caméras de la caméra (22-2n) de véhicule correspondante.

**4.** Procédé selon l'une quelconque des revendications précédentes, le calcul des transformations de coordonnées pour aligner des nuages (41, 42) de points correspondant à des images de caméras qui se chevauchent au moins partiellement comportant le fait de maintenir constant un des nuages (41, 42) de points et de calculer des transformations rigides sur les nuages (41, 42) de points restants qui minimisent une fonction de distance prédéterminée entre les nuages (41, 42) de points.

**5.** Procédé selon l'une quelconque des revendications précédentes, les annotations sémantiques étant calculées automatiquement par segmentation sémantique.

**6.** Procédé selon l'une quelconque des revendications précédentes, la génération de l'image de vue enveloppante comportant l'amélioration de l'image de vue enveloppante en faisant ressortir ou en étiquetant certains objets sur la base des annotations sémantiques.

**7.** Procédé selon l'une quelconque des revendications précédentes, la génération de l'image de vue enveloppante à partir des images de caméras comportant la projection des images de caméras vers une cuvette virtuelle entourant un modèle du véhicule (3), la cuvette virtuelle comportant une région plate autour du véhicule qui se change progressivement en régions de type mural à une distance plus lointaine.

**8.** Procédé selon l'une quelconque des revendications précédentes, la génération de l'image de vue enveloppante à partir des images de caméras comportant le calcul d'une posture du véhicule d'après les paramètres extrinsèques de caméras des caméras (22-2n) de véhicule.

**9.** Dispositif (1) de fourniture d'une image de vue enveloppante, comportant :

une interface (11) prévue pour

- recevoir des paramètres extrinsèques de caméras d'une pluralité de caméras (22-2n) de véhicule d'un véhicule (3), et
- faire recevoir, par chaque caméra (22-2n) de véhicule de la pluralité de caméras (22-2n) de véhicule, des images de caméras respectives, chaque image de caméra chevauchant au moins partiellement au moins une autre image de caméra ; et

une unité (12) de calcul prévue pour :

- générer, pour chaque caméra (22-2n) de véhicule, un nuage (41, 42) de points tridimensionnel respectif indiquant des coordonnées d'objets dans un voisinage de ladite caméra (22-2n) de véhicule, sur la base de l'image de caméra générée par ladite caméra (22-2n) de véhicule,
- fournir des annotations sémantiques pour les nuages (41, 42) de points, les annotations sémantiques comportant l'identification de certains objets,
- calculer des transformations de coordonnées pour aligner des nuages (41, 42) de points correspondant à des images de caméras qui se chevauchent au moins partiellement, et

comportant l'étape consistant à appliquer un algorithme itératif du point le plus proche aux nuages (41, 42) de points, une fonction de distance appliquée aux points du nuage de points étant pondérée sur la base des annotations sémantiques des nuages (41, 42) de points,

- mettre à jour les paramètres extrinsèques de caméras d'après les transformations de coordonnées calculées, et
- générer une image de vue enveloppante à partir des images de caméras, en utilisant les paramètres extrinsèques de caméras mis à jour et les transformations de coordonnées calculées.

10. Dispositif selon la revendication 9, comportant en outre un affichage (13) servant à délivrer l'image de vue enveloppante générée.

11. Véhicule (3), comportant

une pluralité de caméras (22-2n) de véhicule ; et
un dispositif (1) selon l'une des revendications 9 ou 10.

12. Véhicule (3) selon la revendication 11, comportant en outre au moins un capteur (21) prévu pour

- mesurer les paramètres extrinsèques de caméras des caméras (22-2n) de véhicule, et
- fournir les paramètres extrinsèques de caméras mesurés des caméras (22-2n) de véhicule au dispositif.

13. Véhicule (3) selon la revendication 11 ou 12, comportant au moins quatre caméras (22-2n) de véhicule disposées autour du véhicule.

21    22    23    24

...

1

11    12

13

**Fig. 1**

41   411                    421   42

412   413                   423   422

Fig. 2

**Fig. 3**

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DING et al.** Stitching of depth and color images from multiple RGB-D sensors for extended field of view. *International Journal of Advanced Robotic Systems,* 2019, vol. 16 (3
- **LIU et al.** A Novel Method for Extrinsic Calibration of Multiple RGB-D Cameras Using Descriptor-Based Patterns. *Sensors,* 2019, vol. 19 (2
- **FISHER et al.** Semantic alignment of LIDAR data at city scale. *2015 IEEE CONFERENCE ON COMPUTER VISION AND PATTERN RECOGNITION,* 2015
- **ZAGANIDIS et al.** *Integrating Deep Semantic Segmentation into 3D Point Cloud Registration,* 2018